# EUROPEAN PATENT APPLICATION

(11) **EP 4 501 440 A2**
(43) Date of publication of application: **05.02.2025**
(21) Application number: 24191564.4
(22) Date of filing: 29.07.2024
(51) Int. Cl.: B01D 63/08, B01D 53/22

(54) **GAS SEPARATION MEMBRANE UNIT AND GAS SEPARATION APPARATUS**

(30) Priority: 31.07.2023 JP 2023124536
(71) Applicant: Seiko Epson Corporation, Tokyo 160-8801 (JP)
(72) Inventor: FURUSAWA, Masahiro, Suwa-shi, 392-8502 (JP); TADACHI, Kei, Suwa-shi, 392-8502 (JP)
(74) Representative: Lewis Silkin LLP

(57) **Abstract**

A gas separation membrane unit includes: a gas separation membrane configured to separate a predetermined gas component contained in a mixed gas supplied to a first surface by allowing the predetermined gas component to permeate to a second surface that is a reverse surface of the first surface; a gas flow path part including a wall body configured to define an internal space through which the predetermined gas component separated flows; and a first convex structure protruding from at least one of the first surface of the gas separation membrane and an outer surface of the wall body.

## Description

The present application is based on, and claims priority from JP Application Serial Number 2023-124536, filed July 31, 2023, the disclosure of which is hereby incorporated by reference herein in its entirety.

### BACKGROUND

### 1. Technical Field

The present disclosure relates to a gas separation membrane unit and a gas separation apparatus.

### 2. Related Art

In order to implement carbon neutrality or carbon minus, a technique is being considered to absorb and collect carbon dioxide discharged from thermal power plants, boiler facilities, or the like, and carbon dioxide in the atmosphere. As that technique, there has been known a membrane separation method of separating carbon dioxide using a gas separation membrane.

For example, JP-A-2023-033590 discloses a gas separation method in which a gas separation membrane is used to selectively permeate a specific gas (A) from a mixed gas. The gas separation method includes supplying the mixed gas to one surface of the gas separation membrane, wherein the film thickness of the gas separation membrane is 1 µm or less, the concentration of the gas (A) in the mixed gas is 10000 ppm by mass or less, and selective permeation of the gas (A) by the gas separation membrane is performed under the condition that the pressure difference between both surfaces of the gas separation membrane is 1 atm or less.

According to such a gas separation method, the gas (A) can be satisfactorily separated even under a moderate condition in which the pressure difference between both of the surfaces of the gas separation membrane is 1 atm or less.

JP-A-2023-033590 is an example of the related art.

In the membrane separation method, it is a problem to improve separation efficiency of a predetermined gas component. In order to increase the separation efficiency of the gas separation membrane, it is necessary to maintain a high concentration of a predetermined gas component at the upstream of the gas separation membrane. However, when a predetermined gas component passes through the gas separation membrane, the concentration of the gas component at the upstream decreases, resulting in a decrease in separation efficiency.

Therefore, it is required to realize a gas separation device in which a concentration of a predetermined gas component hardly decreases even when the predetermined gas component passes through a gas separation membrane and a decrease in separation efficiency can be suppressed.

### SUMMARY

A gas separation membrane unit according to an application example of the present disclosure includes:
a gas separation membrane configured to separate a predetermined gas component contained in a mixed gas supplied to a first surface by allowing the predetermined gas component to permeate to a second surface that is a reverse surface of the first surface;
a gas flow path part including a wall body configured to define an internal space through which the predetermined gas component separated flows; and
a first convex structure protruding from at least one of the first surface of the gas separation membrane and an outer surface of the wall body.

A gas separation apparatus according to an application example of the present disclosure includes:
the gas separation membrane unit according to the application example of the present disclosure; and
an exhaust pump configured to exhaust the predetermined gas component flowing through the internal space of the gas flow path part.

### BRIEF DESCRIPTION OF THE DRAWINGS

FIG. 1 is a perspective view illustrating a configuration of a gas separation apparatus according to a first embodiment.
FIG. 2 is a cross-sectional view of the gas separation apparatus shown in FIG. 1.
FIG. 3 is a schematic diagram in which an example of a gas flow is added to a part of the cross-sectional view shown in FIG. 2.
FIG. 4 is a schematic diagram in which an example of a gas flow is added to a cross-sectional view of a model (a model of a related-art example) in which a first convex structure is omitted.
FIG. 5 is a partial enlarged view illustrating the first convex structure in FIG. 1.
FIG. 6 is a graph showing a relationship between the gas permeability to carbon dioxide in a gas separation membrane and the concentration of carbon dioxide on a first surface of the gas separation membrane.
FIG. 7 is a graph showing a relationship between a flow velocity of a mixed gas and a concentration ratio of carbon dioxide in the gas separation membrane.
FIG. 8 is a cross-sectional view illustrating a configuration of a gas separation apparatus according to a second embodiment.

### DESCRIPTION OF EMBODIMENTS

Hereinafter, a gas separation membrane unit and a gas separation apparatus of the present disclosure will be described in detail based on some embodiments illustrated in the accompanying drawings.

### 1. First Embodiment

First, a gas separation membrane unit and a gas separation apparatus according to a first embodiment will be described.

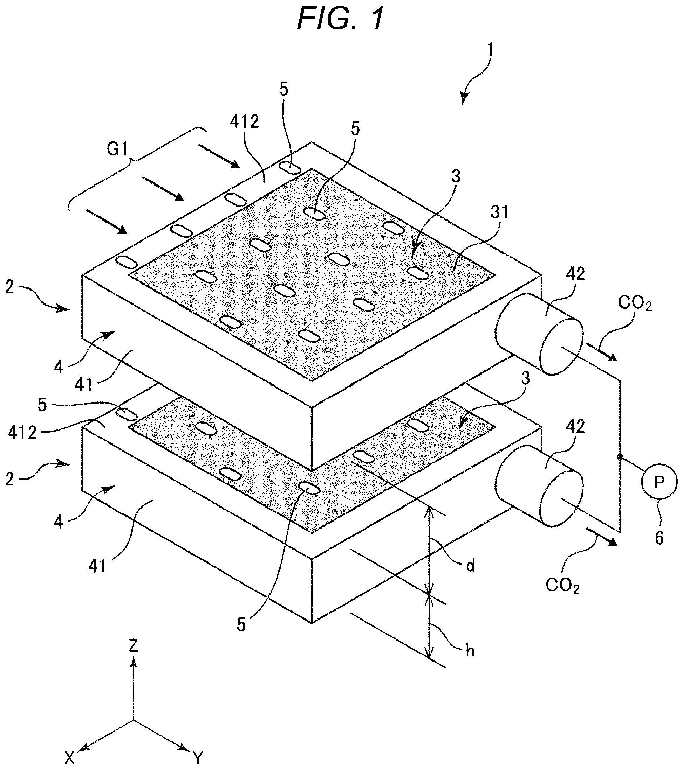

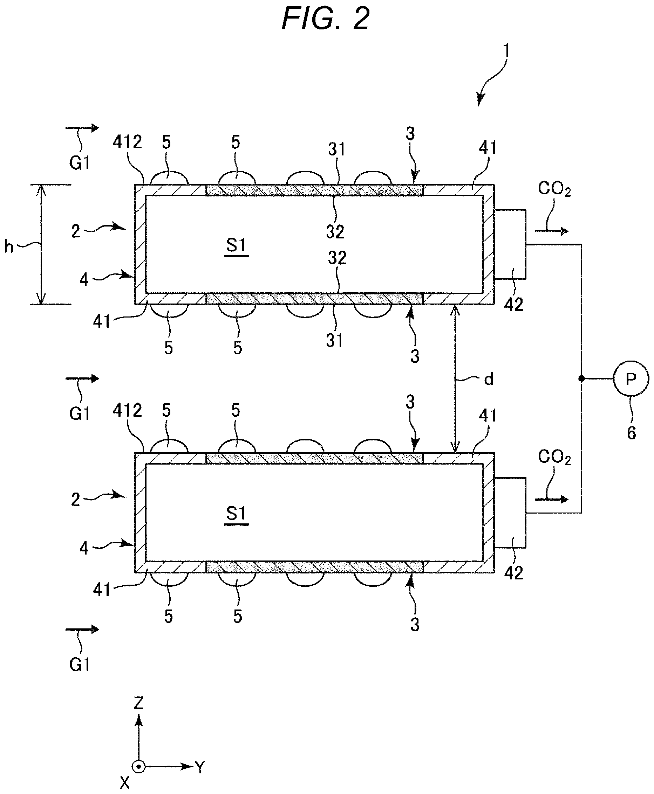

FIG. 1 is a perspective view illustrating a configuration of a gas separation apparatus 1 according to the first embodiment. FIG. 2 is a cross-sectional view of the gas separation apparatus 1 shown in FIG. 1.

In the drawings of the present application, an X axis, a Y axis, and a Z axis are set as three axes orthogonal to each other. Each axis is indicated by an arrow, and a tip side of the arrow is defined as a "positive plus" and a base end side of the arrow is defined as a "negative side." In the following description, for example, an "X-axis direction" includes both a plus direction and a minus direction of the X axis. The same applies to a Y-axis direction and a Z-axis direction. In the following description, in particular, the positive side of the Z axis is also referred to as an "upper side," and the negative side of the Z axis is also referred to as a "lower side." However, the Z axis is not required to be parallel to a vertical axis, and may cross the vertical axis.

### 1.1. Overview

The gas separation apparatus 1 shown in FIG. 1 includes two gas separation membrane units 2, 2 (gas separation membrane units according to the embodiment) and an exhaust pump 6. The gas separation membrane unit 2 includes a gas separation membrane 3, a gas flow path part 4, and a first convex structure 5. The gas separation membrane 3 separates carbon dioxide CO₂ (a predetermined gas component) contained in a mixed gas G1 supplied to a first surface 31 (an obverse surface) by allowing carbon dioxide CO₂ to permeate to a second surface 32 (a reverse surface) with priority over other gas components. The gas flow path part 4 has a wall body 41 that defines an internal space S1 through which a gas containing carbon dioxide CO₂ (a gas having a higher concentration of carbon dioxide CO₂ than that of the mixed gas G1) separated and extracted with priority flows. The first convex structure 5 protrudes from the first surface 31 of the gas separation membrane 3 and an outer surface 412 of the wall body 41. The wall body 41 holds the gas separation membrane 3, and the outer surface 412 of the wall body 41 on which the first convex structure 5 is provided is disposed on the outer periphery of the gas separation membrane 3.

In such a gas separation membrane unit 2, the first convex structure 5 causes turbulence to the gas flow formed on the first surface 31 of the gas separation membrane 3 under a predetermined condition. Accordingly, even when the carbon dioxide CO₂ in the mixed gas G1 on the first surface 31 passes through the gas separation membrane 3 and the concentration thereof decreases, the new mixed gas G1 is efficiently supplied onto the first surface 31. As a result, the concentration of the carbon dioxide CO₂ on the first surface 31 can be maintained high, and a decrease in separation efficiency in the gas separation membrane 3 can be suppressed.

### 1.2. Gas Separation Membrane Unit

In the gas separation apparatus 1 shown in FIG. 1, the two gas separation membrane units 2, 2 are arranged at a distance from each other in the Z-axis direction. Since the gas separation apparatus 1 includes the plurality of gas separation membrane units 2, 2, the gas separation apparatus 1 having high separation efficiency of carbon dioxide CO₂ can be realized.

The direction in which the two gas separation membrane units 2, 2 are arranged is not limited to the Z-axis direction (a direction crossing the first surface 31) as long as the direction crosses the first surface 31, but when the direction is the Z-axis direction, the foot print of the gas separation apparatus 1 can be reduced.

The exhaust pump 6 is coupled to the gas flow path part 4 and discharges the internal space S1 that contains carbon dioxide CO₂. As a result, the internal space S1 is depressurized to a pressure level lower than the atmospheric pressure, and a pressure difference is generated between the first surface 31 side and the second surface 32 side of the gas separation membrane 3. In the gas separation membrane 3, carbon dioxide CO₂ can be transmitted to be separated using the pressure difference as a driving force.

The gas separation membrane unit 2 is placed in an environment where the mixed gas G1 exists. The mixed gas G1 includes carbon dioxide CO₂, which is a gas component as a separation target, and other gas components (non-target components). The mixed gas G1 is not particularly limited, and is, for example, an exhaust gas discharged from the atmosphere or a facility such as a factory. The gas component as the separation target is not limited to carbon dioxide CO₂, and may be another gas component. The non-target component varies depending on the mixed gas G1, but is nitrogen, oxygen, or the like when the mixed gas G1 is air.

The gas separation membrane unit 2 is exposed to a gas flow of the mixed gas G1. In each drawing of the present application, the direction of the gas flow of the mixed gas G1 is indicated by arrows. In the present embodiment, the gas flow of the mixed gas G1 is formed from the Y-axis negative side toward the Y-axis positive side. By the gas separation membrane unit 2 being exposed to the gas flow, the mixed gas G1 high in concentration of carbon dioxide CO₂ is continuously supplied. Accordingly, the separation efficiency of carbon dioxide CO₂ in the gas separation membrane unit 2 can be kept high. In the present specification, regarding the gas flow of the mixed gas G1, the Y-axis negative side is referred to as "upstream," and the Y-axis positive side is referred to as "downstream."

When the mixed gas G1 is the air, the gas flow of the mixed gas G1 may be a natural flow of the air, or a flow generated by a fan not shown. Also, when the mixed gas G1 is an exhaust gas, the gas flow of the mixed gas G1 may be a flow generated by an exhaust source or a flow generated by a fan not shown. The gas separation apparatus 1 may include a fan that generates a gas flow in the mixed gas G1.

A distance d between the gas separation membrane units 2 in the Z-axis direction is set to be longer than the protrusion height of the first convex structure 5, and is, for example, about 1 mm or more and 1 m or less, and preferably 10 mm or more and 10 cm or less.

The number of the gas separation membrane units 2 provided to the gas separation apparatus 1 is not limited to two, and may be one, or three or more.

### 1.2.1. Gas Separation Membrane

The gas separation membrane 3 has the first surface 31 and the second surface 32 having an obverse-reverse relationship with each other. The gas separation membrane 3 selectively or preferentially allows the carbon dioxide CO₂ contained in the mixed gas G1 supplied to the first surface 31 side to permeate to the second surface 32 side over other gas components. Accordingly, the gas separation membrane 3 has a property that the gas permeability to carbon dioxide CO₂ is higher than the gas permeability to the non-target component (a property that the gas selectivity of carbon dioxide CO₂ is high). Hereinafter, the ratio of the gas permeability to carbon dioxide to the gas permeability to nitrogen is simply referred to as "gas selectivity."

The gas selectivity of the gas separation membrane 3 is preferably 3 or more, and more preferably 10 or more and 1000 or less. When the gas selectivity is within the above range, the gas separation membrane 3 can efficiently separate and recover carbon dioxide CO₂ out of the mixed gas G1.

The gas permeability to nitrogen in the gas separation membrane 3 and the gas permeability to carbon dioxide in the gas separation membrane 3 are each measured in accordance with a gas permeability test method (Part 1: differential pressure method) defined in JIS K 7126-1:2006. A gas permeability measuring device is used for the measurement. Examples of the gas permeability measuring device include GTR-11A/31A manufactured by GTR TEC Corporation. In the device, gas that permeates through the gas separation membrane 3 is introduced into a gas chromatograph to measure the gas permeability to each component.

In the gas separation membrane 3, the gas permeability to carbon dioxide is preferably 1000 GPU or more, more preferably 5000 GPU or more and 100000 GPU or less, and still more preferably 10000 GPU or more and 50000 GPU or less. Accordingly, it is possible to realize the gas separation membrane 3 capable of reducing the input amount of energy necessary for the separation, specifically, reducing the pressure difference between the first surface 31 side and the second surface 32 side. When the gas permeability to the carbon dioxide in the gas separation membrane 3 is lower than the lower limit value, a large amount of energy is required for the separation of carbon dioxide, and there is a possibility that an economic efficiency in operation of the gas separation apparatus 1 is reduced. On the other hand, when the gas permeability to the carbon dioxide in the gas separation membrane 3 exceeds the upper limit value, the cost for manufacturing (procuring) the gas separation membrane 3 may increase. The 1 GPU is 3.35×10⁻¹⁰ mol•m⁻² •s⁻¹•Pa⁻¹.

The thickness of the first gas separation membrane 3 is not particularly limited, but is preferably 1 nm or more and 1000 µm or less, more preferably 5 nm or more and 100 µm or less, and still more preferably 10 nm or more and 10 µm or less.

The average thickness of the gas separation membrane 3 is an average value of thicknesses measured at 10 positions in the gas separation membrane 3. The thickness of the gas separation membrane 3 can be measured using, for example, a thickness gauge.

The size of the first gas separation membrane 3 is not particularly limited, but the maximum length is preferably 5 cm or more and 2 m or less, and more preferably 10 cm or more and 1 m or less. As a result, the gas separation membrane 3 having a mechanical strength enough to withstand the pressure difference and capable of ensuring a sufficient gas permeation amount is obtained.

The gas separation membrane 3 may be a single layer or a composite layer formed by stacking a plurality of layers. The gas separation membrane 3 may be supported by a porous layer that is porous. In particular, when the thickness of the gas separation membrane 3 is 100 µm or less, it is preferable to laminate the gas separation membrane 3 and the porous layer each other to improve the overall strength.

Examples of the constituent material of the gas separation membrane 3 include a polymer material, a ceramic material, and a metal material. The constituent material of the gas separation membrane 3 may be a composite material of these materials or a composite material of these materials and other materials.

Examples of the polymer material include polyolefin resins such as polyethylene and polypropylene, fluorine-containing resins such as polytetrafluoroethylene, polyvinyl fluoride, and polyvinylidene fluoride, organopolysiloxane (silicone resin), polystyrene, cellulose, cellulose acetate, polyurethane, polyacrylonitrile, polyphenylene oxide, polysulfone, polyethersulfone, polyimide, polyaramid, and nylon.

Examples of the ceramic material include alumina, cordierite, mullite, silicon carbide, and zirconia. Examples of the metal material include stainless steel.

### 1.2.2. Gas Flow Path Part

The gas flow path part 4 includes the wall body 41 that defines the internal space S1 through which the gas containing carbon dioxide CO₂ thus separated flows, and an exhaust port 42 provided to the wall body 41.

The wall body 41 is a box body which has a flat shape spreading along the X-Y plane, which has a hollow inside, and which has a substantially rectangular parallelepiped shape. The internal space S1 is defined by the wall body 41. Further, a part of each of two surfaces crossing the Z axis is opened, and the gas separation membrane 3 is disposed so as to close the opening. Accordingly, as shown in FIG. 2, the two gas separation membranes 3, 3 arranged vertically are provided to the wall body 41. That is, the two gas separation membranes 3, 3 are disposed such that the second surfaces 32 face each other. Thus, carbon dioxide CO₂ can be separated on both the upper surface side and the lower surface side of the gas separation membrane unit 2. The number of the gas separation membranes 3 provided to one wall body 41 is not particularly limited and may be one or three or more. In the present embodiment, the gas separation membrane 3 is disposed so as to cross the Z axis, but the gas separation membrane 3 disposed so as to cross the X axis may be added.

The exhaust port 42 has a tubular shape and communicates with the internal space S1. As shown in FIG. 1, the exhaust pump 6 is coupled to the exhaust port 42. By the operation of the exhaust pump 6, the internal space S1 including carbon dioxide CO₂ is exhausted through the exhaust port 42. The pressure of the internal space S1 when the exhaust pump 6 is in operation may be lower than the atmospheric pressure, and is preferably 10 kPa or less, and more preferably 1 kPa or less. Accordingly, a sufficient pressure difference can be ensured between the first surface 31 side and the second surface 32 side of the gas separation membrane 3, and the separation efficiency of carbon dioxide CO₂ can sufficiently be increased. The lower limit value of the pressure in the internal space S1 is not particularly limited, but is preferably 0.001 Pa or more, and more preferably 0.1 Pa or more in consideration of the introduction cost and the running cost of the exhaust pump 6, the deformation resistance of the gas separation membrane 3, and the like. In view of this, the pressure difference between the internal space S1 and the outside is preferably 0.001 Pa or more and 10 kPa or less, and more preferably 0.1 Pa or more and 1 kPa or less.

Examples of the constituent materials of the wall body 41 and the exhaust port 42 include a resin material, a metal material, and a ceramic material. In addition, a composite material containing these materials may be used.

The wall body 41 and the gas separation membrane 3 are bonded to each other so as not to impair airtightness. The bonding method is not particularly limited, and examples thereof include bonding with an adhesive, bonding by sandwiching, and bonding by fusion bonding.

A height h in the Z-axis direction of the wall body 41 is not particularly limited but is preferably 5 mm or more and 30 cm or less, and more preferably 1 cm or more and 10 cm or less. Accordingly, even when a plurality of gas separation membrane units 2 are stacked, an increase in size of the gas separation apparatus 1 can be avoided.

The maximum length of the wall body 41 along the X-Y plane is not particularly limited but is preferably 5 cm or more and 2 m or less, and more preferably 10 cm or more and 1 m or less. Accordingly, it is possible to realize the gas separation membrane unit 2 capable of arranging the gas separation membranes 3 having a sufficient size and ensuring a sufficient gas permeation amount.

### 1.2.3. First Convex Structure

The first convex structure 5 is a member protruding from the first surface 31 of the gas separation membrane 3 and the outer surface 412 of the wall body 41.

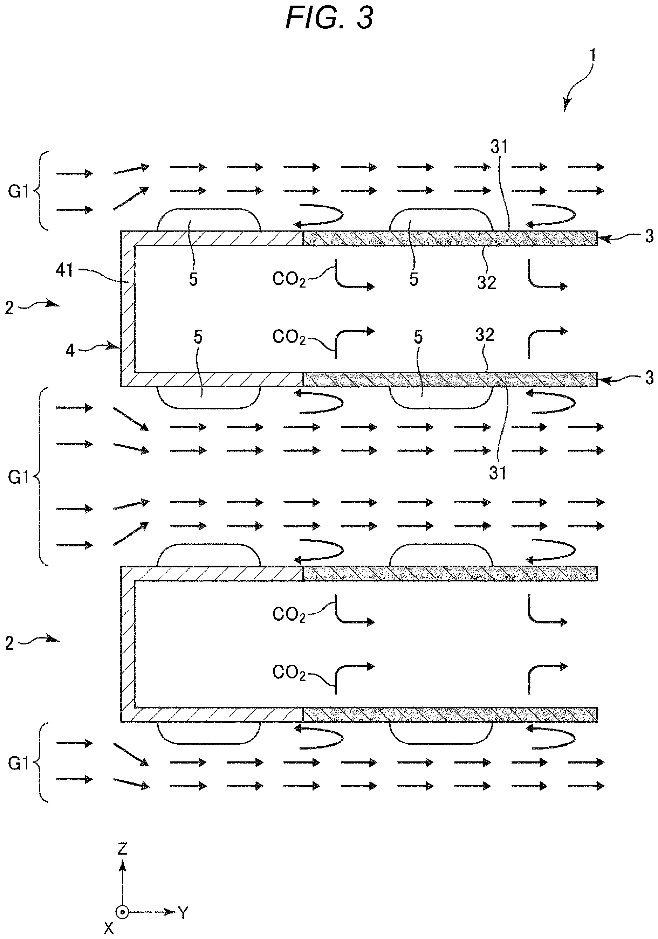

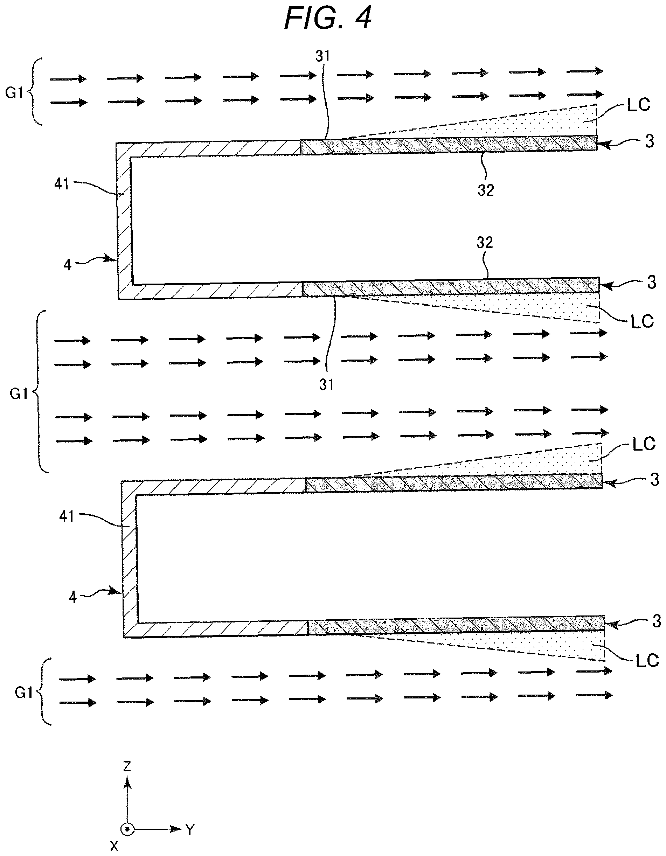

FIG. 3 is a schematic diagram in which an example of a gas flow is added to a part of the cross-sectional view shown in FIG. 2. FIG. 4 is a schematic diagram in which an example of a gas flow is added to a cross-sectional view of a model (a model of a related-art example) in which the first convex structure 5 is omitted.

As shown in FIG. 4, when the first convex structure 5 is not provided, the gas flow of the mixed gas G1 becomes a laminar flow flowing along the first surface 31 and the outer surface 412. In the present specification, the "laminar flow" refers to a gas flow flowing parallel to the first surface 31 and the outer surface 412. The flow velocity of the laminar flow tends to decrease toward the surface of the object. Therefore, in the vicinity of the first surface 31 of the gas separation membrane 3, the gas exchange efficiency of the mixed gas G1 decreases, and the concentration of carbon dioxide CO₂ decreases. In FIG. 4, a region where the concentration of carbon dioxide CO₂ is low is referred to as a "low-concentration region LC," and is attached with dots. When such the low-concentration region LC is generated, the gas separation membrane 3 does not sufficiently function, and the separation efficiency of carbon dioxide CO₂ decreases.

In contrast, when the first convex structure 5 is provided on the first surface 31 or the outer surface 412, as illustrated in FIG. 3, a part of the gas flow of the mixed gas G1 hits the first convex structure 5 to generate turbulence at the downstream. The turbulence includes, for example, a flow of rotating the mixed gas G1 in the Z-axis direction. Therefore, at the downstream of the first convex structure 5, even when the concentration of the carbon dioxide CO₂ at the first surface 31 side decreases due to the permeation of the carbon dioxide CO₂ in the gas separation membrane 3, the concentration is easily recovered because the new mixed gas G1 is continuously supplied due to the influence of the turbulence. As a result, in the gas separation apparatus 1 illustrated in FIG. 3, the generation of the low-concentration region LC as illustrated in FIG. 4 is suppressed, and a decrease in the separation efficiency of carbon dioxide CO₂ can be suppressed.

The shape, material, arrangement, and the like of the first convex structure 5 are not particularly limited as long as the first convex structure 5 is a member that generates the turbulence as described above. In FIG. 1, the first convex structure 5 is disposed on each of the first surface 31 of the gas separation membrane 3 and the outer surface 412 of the wall body 41. When the plurality of gas separation membranes 3 are provided to one wall body 41, the first convex structure 5 is preferably disposed on the first surface 31 or the outer surface 412 in accordance with the arrangement of the gas separation membranes 3. Accordingly, it is possible to suppress the decrease in separation efficiency of carbon dioxide CO₂ in each gas separation membrane 3.

The number of the first convex structures 5 may be one but is preferably two or more. By providing the plurality of first convex structures 5, it is possible to generate the turbulence in respective parts of the gas separation membrane 3. As a result, a decrease in separation efficiency of carbon dioxide CO₂ can be particularly suppressed.

The first convex structure 5 may be provided only on one of the first surface 31 of the gas separation membrane 3 and the outer surface 412 of the wall body 41 but is preferably provided to both thereof. This can particularly suppress the decrease in the separation efficiency of carbon dioxide CO₂. When the first convex structure 5 is provided on the outer surface 412, it is preferable to dispose the first convex structure 5 at the upstream of the gas separation membrane 3 in the flow of the mixed gas G1. Specifically, the first convex structure 5 preferably protrudes at the upstream of the flow of the mixed gas G1 with respect to the gas separation membrane 3 in the outer surface 412. Accordingly, since the gas separation membrane 3 is located at the downstream of the first convex structure 5, the turbulence is apt to occur on the first surface 31 of the gas separation membrane 3. This makes it easier to obtain the effect of suppressing the decrease in separation efficiency.

Further, when the first convex structure 5 is provided to the wall body 41, it is possible to avoid a decrease in the effective area of the gas separation membrane 3 as compared with when the first convex structure 5 is provided to the gas separation membrane 3. This can suppress the decrease in separation efficiency. On the other hand, when the first convex structure 5 is provided to the gas separation membrane 3, the turbulence can be generated over a wide area of the gas separation membrane 3. Accordingly, it is possible to enjoy an advantage of suppressing the decrease in separation efficiency in the wide area.

The gas flow of the mixed gas G1 is along the Y axis, and the first convex structures 5 are preferably arranged along the X axis. Thus, the turbulence can be generated in the wide area in the X-axis direction. Further, in FIG. 1, a plurality of rows of the first convex structures 5 extending along the X axis are arranged in the Y-axis direction. Thus, the turbulence can be generated in the wide area in the Y-axis direction.

Furthermore, in the rows of the first convex structures 5, the positions of the first convex structures 5 in the X-axis direction may be aligned with each other or may be shifted from each other. In the latter case, since the region where the turbulence is generated is also shifted, the turbulence can be generated in the wide area of the gas separation membrane 3.

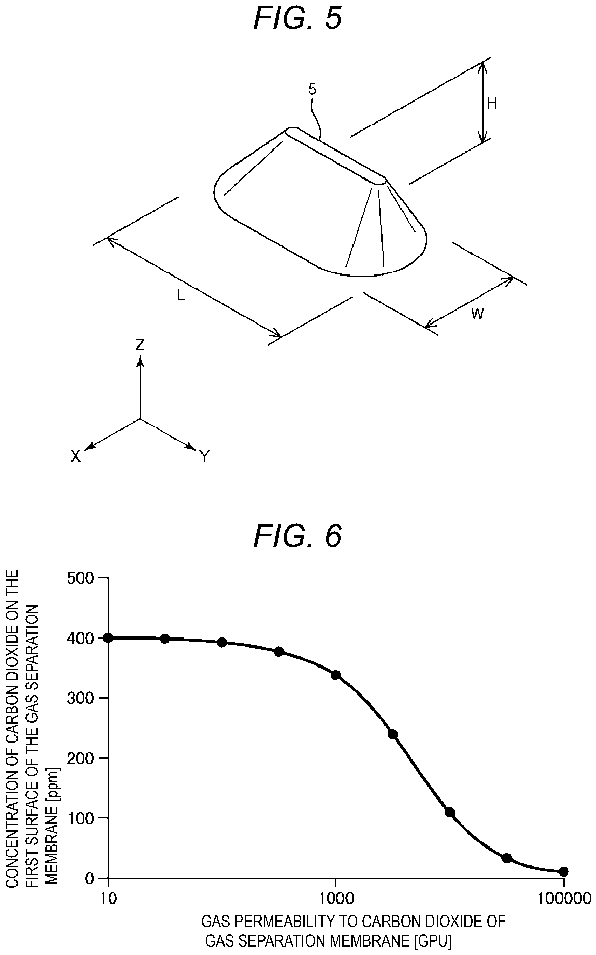

FIG. 5 is a partial enlarged view showing the first convex structure 5 shown in FIG. 1.

The shape of the first convex structure 5 is not particularly limited, but is preferably a shape in which the cross-sectional area in the X-Y plane gradually decreases toward the positive side of the Z axis as illustrated in FIG. 5 when, for example, an installation surface is a surface facing the Z axis positive side. When adopting such a shape, it is possible to generate the turbulence without greatly impairing the flow velocity of the mixed gas G1. As a result, a decrease in separation efficiency of carbon dioxide CO₂ can be particularly suppressed.

The height H of the first convex structure 5 in the Z-axis direction is not particularly limited, but is preferably 0.1 mm or more and 50 mm or less, more preferably 1 mm or more and 30 mm or less, and still more preferably 3 mm or more and 20 mm or less. When the height H is within the above range, the appropriate turbulence can be generated without greatly impairing the flow velocity of the mixed gas G1. When the height H is less than the lower limit value, the turbulence may not be sufficiently generated depending on the flow velocity of the mixed gas G1, the size of the first convex structure 5, and the like. On the other hand, when the height H exceeds the upper limit value, the flow velocity of the mixed gas G1 may be reduced depending on the size of the first convex structure 5 or the like.

A length L of the first convex structure 5 in the Y-axis direction is not particularly limited, but is preferably 1 mm or more and 200 mm or less, more preferably 3 mm or more and 100 mm or less, and still more preferably 5 mm or more and 50 mm or less.

When the width of the first convex structure 5 in the X-axis direction is W, the ratio W/L of the width W to the length L is preferably 0.01 or more and 2.0 or less, more preferably 0.02 or more and 1.0 or less, and still more preferably 0.03 or more and 0.7 or less. When the ratio W/L is within the above range, the appropriate turbulence can be generated without impairing the flow velocity of the mixed gas G1. When the ratio W/L is less than the lower limit value, the width of the region where the turbulence occurs may be insufficient. On the other hand, when the ratio W/L exceeds the upper limit value, the flow velocity of the mixed gas G1 may be impaired, or the appropriate turbulence may not be generated.

The first convex structure 5 is disposed on the first surface 31 or the outer surface 412 with a method such as adhesion or fusion bonding. The first convex structure 5 may be integrated with the first surface 31 or the outer surface 412. That is, the first convex structure 5 may be formed by molding a part of the gas separation membrane 3 or the wall body 41. However, the gas separation membrane 3 is preferably a separate body from the first convex structure 5 from the viewpoint of ease of manufacture.

In addition, when the gas permeability to carbon dioxide CO₂ of the gas separation membrane 3 is within the above range, the significance of providing the first convex structure 5 becomes more remarkable. Specifically, when the gas permeability is high, the rate at which the concentration of carbon dioxide CO₂ decreases on the first surface 31 of the gas separation membrane 3 is high. Therefore, when the replenishment of the new mixed gas G1 is delayed, it becomes difficult to maintain the concentration of carbon dioxide CO₂ at a high level.

FIG. 6 is a graph showing the relationship between the gas permeability to carbon dioxide of the gas separation membrane 3 and the concentration of carbon dioxide on the first surface 31 of the gas separation membrane 3. In the graph shown in FIG. 6, the concentration of carbon dioxide on the first surface 31 when the flow velocity of the mixed gas G1 having a carbon dioxide concentration of 400 ppm supplied onto the first surface 31 was zero, and one second elapsed from the supply of the mixed gas G1 is plotted. In this case, since the flow velocity is zero, it is assumed that the carbon dioxide spreads in the mixed gas G1 only by the diffusion effect. The gas selectivity of the gas separation membrane 3 is assumed to be infinite.

As is clear from FIG. 6, when the gas permeability to the carbon dioxide of the gas separation membrane 3 is 1000 GPU or more, the concentration of the carbon dioxide rapidly decreases. Therefore, when the gas permeability is 1000 GPU or more, the significance of providing the first convex structure 5 is increased. By providing the first convex structure 5, it is possible to realize the gas separation apparatus 1 making the best of the high gas permeability of the gas separation membrane 3.

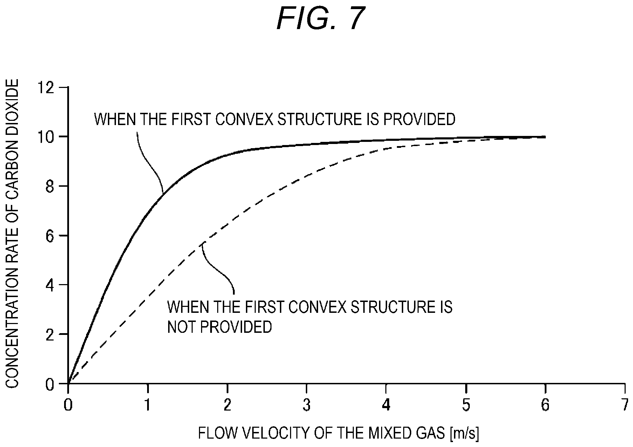

FIG. 7 is a graph showing a relationship between the flow velocity of the mixed gas G1 and the concentration ratio of carbon dioxide in the gas separation membrane 3. The flow velocity of the mixed gas G1 is a velocity in a direction parallel to the first surface 31 of the gas separation membrane 3. The concentration ratio of carbon dioxide is the ratio of the concentration of carbon dioxide at the second surface 32 side to the concentration ratio of carbon dioxide at the first surface 31 side.

As is clear from FIG. 7, when the first convex structure 5 is provided, the concentration ratio of the carbon dioxide CO₂ is higher than that when the first convex structure 5 is not provided. In particular, it is understood that when the flow velocity of the mixed gas G1 is low, this tendency is remarkable. Accordingly, by providing the first convex structure 5, even when a fan is used to provide a flow velocity to the mixed gas G1, a sufficiently high concentration ratio can be realized while suppressing the power consumption of the fan.

Based on the calculation example of FIG. 7, when the flow velocity of the mixed gas G1 is in a range of more than 0 m/s and 5 m/s or less, it can be said that the significance of providing the first convex structure 5 becomes higher. The concentration ratio in FIG. 7 is a calculated value when the mass concentration of carbon dioxide at the first surface 31 side is 400 ppm, the gas selectivity of the gas separation membrane 3 is 10, and the gas permeability to carbon dioxide of the gas separation membrane 3 is 10000 GPU.

### 1.3. EXHAUST PUMP

Examples of the exhaust pump 6 include a dry pump such as a screw pump and a scroll pump, an oil rotary pump, and a turbo molecular pump. Among them, a dry pump is preferably used, and a screw pump is more preferably used. These are useful as the exhaust pump 6 because no oil or liquid is used, the internal space S1 is not contaminated, and the power consumption is low.

### 2. Second Embodiment

Next, a gas separation membrane unit and a gas separation apparatus according to a second embodiment will be described.

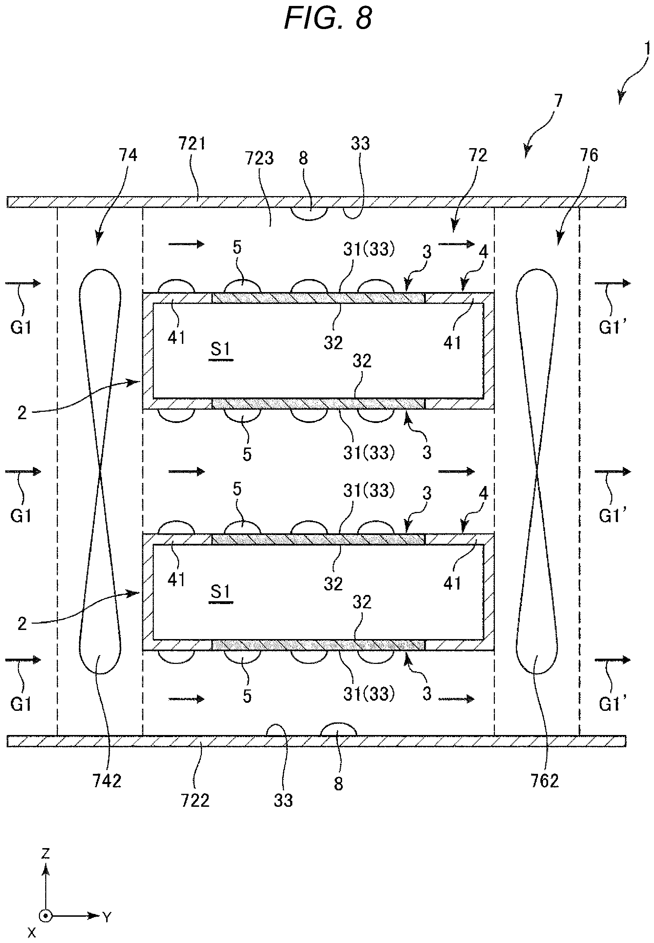

FIG. 8 is a cross-sectional view illustrating a configuration of the gas separation apparatus 1 according to the second embodiment.

Hereinafter, the second embodiment will be described, and in the following description, differences from the first embodiment will be mainly described, and description of similar matters will be omitted.

The second embodiment is substantially the same as the first embodiment except that a mixed gas supply unit 7 is further provided.

As shown in FIG. 8, the gas separation apparatus 1 according to the second embodiment includes the mixed gas supply unit 7 in addition to the above-described gas separation membrane unit 2. The mixed gas supply unit 7 includes a mixed gas flow path part 72, a mixed gas introduction part 74, and a mixed gas discharge part 76.

The mixed gas flow path part 72 is a flow channel which is provided above and below the gas separation membrane unit 2 and is defined by wall surfaces 33 including the first surfaces 31 of the gas separation membranes 3, and through which the mixed gas G1 flows. Specifically, as shown in FIG. 8, the mixed gas flow path part 72 includes an upper plate 721 provided at the uppermost area of the gas separation membrane units 2, a lower plate 722 provided at the lowermost area, and two side plates 723 covering side surfaces crossing the X axis. The upper plate 721 and the lower plate 722 are located across the two gas separation membrane units 2, 2 in the Z-axis direction. The two side plates 723 are located across the two gas separation membrane units 2, 2 in the X-axis direction. Accordingly, the first surfaces 31, the inner surfaces crossing the X axis, and the inner surfaces crossing the Z axis constitute the wall surfaces 33. FIG. 8 only illustrates one of the side plates 723.

Examples of the constituent materials of the upper plate 721, the lower plate 722, and the side plates 723 include a resin material, a metal material, and a ceramic material. In addition, a composite material containing these materials may be used.

The mixed gas supply unit 7 shown in FIG. 8 includes second convex structures 8 protruding from the wall surfaces 33. Accordingly, the turbulence generated by the second convex structure 8 can also act on the mixed gas G1 located in the vicinity of the first surface 31. As a result, the decrease in the concentration of carbon dioxide CO₂ on the first surface 31 can further be suppressed.

The configuration of the second convex structure 8 is substantially the same as that of the first convex structure 5 except for the arrangement. The second convex structure 8 may be disposed on the wall surface 33 but is preferably disposed on a surface opposite to the first surface 31. This makes it easier for the turbulence generated by the second convex structure 8 to act on the mixed gas G1 located in the vicinity of the first surface 31.

The mixed gas introduction part 74 introduces the mixed gas G1 into the mixed gas flow path part 72. The mixed gas introduction part 74 shown in FIG. 8 includes a feeding fan 742. The feeding fan 742 feeds the mixed gas G1 toward the inside of the mixed gas flow path part 72. Accordingly, the flow velocity can be provided to the mixed gas G1 in the mixed gas flow path part 72.

The mixed gas discharge part 76 discharges a mixed gas G1' from the mixed gas flow path part 72. The mixed gas G1' is a mixed gas after being subjected to the separation of carbon dioxide CO₂ in the gas separation membrane unit 2. The mixed gas discharge part 76 shown in FIG. 8 has an exhaust fan 762. The exhaust fan 762 discharges the mixed gas G1' toward the outside of the mixed gas flow path part 72. Accordingly, the mixed gas G1' having a low concentration of carbon dioxide CO₂ can quickly be discharged, and a decrease in the concentration of carbon dioxide CO₂ on the first surface 31 of the gas separation membrane 3 can more reliably be suppressed.

In the second embodiment as described above, the same effects as those of the first embodiment can also be obtained. Further, in the second embodiment, by providing the mixed gas flow path part 72, even when the exhaust gas higher in concentration of carbon dioxide CO₂ than the atmosphere is used as the mixed gas G1, the carbon dioxide CO₂ can be separated while preventing the mixed gas G1 from being diluted with the air. Therefore, even in the case of the mixed gas G1 originally having the high concentration of carbon dioxide CO₂ such as the mixed gas G1 containing high concentration of carbon dioxide CO₂ generated in various plants or the like, it is possible to suppress the decrease in separation efficiency.

### 3. Advantages Exerted by Embodiments described above

As described above, the gas separation membrane unit 2 according to the embodiment includes the gas separation membrane 3, the gas flow path part 4, and the first convex structure 5. The gas separation membrane 3 separates the carbon dioxide CO₂ (the predetermined gas component) contained in the mixed gas G1 supplied to the first surface 31 by allowing the carbon dioxide CO₂ to permeate to the second surface 32 which is the reverse surface of the first surface 31. The gas flow path part 4 has the wall body 41 that defines the internal space S1 through which the gas containing the carbon dioxide CO₂ thus separated flows. The first convex structure 5 protrudes from at least one of the first surface 31 of the gas separation membrane 3 and the outer surface 412 of the wall body 41.

According to such a configuration, even when the concentration of carbon dioxide CO₂ in the mixed gas G1 on the first surface 31 of the gas separation membrane 3 decreases due to the action of the gas separation membrane 3, the new mixed gas G1 continues to be rapidly supplied onto the first surface 31 due to the first convex structure 5 causing the turbulence with respect to the gas flow formed on the first surface 31. As a result, the gas separation membrane unit 2 in which the concentration of the carbon dioxide CO₂ on the first surface 31 is less likely to decrease even when the carbon dioxide CO₂ permeates the gas separation membrane 3, and thus the decrease in separation efficiency can be suppressed is obtained.

The gas separation membrane unit 2 according to the embodiment includes the two gas separation membranes 3, 3 arranged such that the second surfaces 32 are opposed to each other.

According to such a configuration, carbon dioxide CO₂ can be separated on both sides (both the upper surface side and the lower surface side) of the gas separation membrane unit 2.

In the gas separation membrane unit 2 according to the embodiment, the first convex structures 5 are disposed respectively on the first surfaces 31 of the two gas separation membranes 3, 3.

According to such a configuration, it is possible to suppress the decrease in separation efficiency of carbon dioxide CO₂ in each gas separation membrane 3.

The protruding height of the first convex structure 5 is preferably 0.1 mm or more and 50 mm or less.

When the height H is within the above range, the appropriate turbulence can be generated without greatly impairing the flow velocity of the mixed gas G1.

The gas permeability to carbon dioxide of the gas separation membrane 3 is preferably 5000 GPU or more and 100000 GPU or less.

According to such a configuration, it is possible to realize the gas separation membrane 3 capable of reducing the input amount of the energy necessary for the separation, specifically, reducing the pressure difference between the first surface 31 side and the second surface 32 side. In addition, it is possible to realize the gas separation membrane unit 2 which is capable of maximizing the action of the first convex structure 5, and the gas separation membrane 3 for which can easily be procured.

The gas separation apparatus 1 according to the embodiment includes the gas separation membrane unit 2 according to the embodiment and the exhaust pump 6. The exhaust pump 6 discharges carbon dioxide CO₂ (the predetermined gas component) flowing through the internal space S1 of the gas flow path part 4.

According to such a configuration, it is possible to reduce the pressure in the internal space S1 to the level lower than the atmospheric pressure, and generate the pressure difference between the first surface 31 side and the second surface 32 side of the gas separation membrane 3. The gas separation apparatus 1 capable of separating carbon dioxide CO₂ using the pressure difference is obtained. Further, even when the concentration of carbon dioxide CO₂ in the mixed gas G1 on the first surface 31 of the gas separation membrane 3 decreases due to the action of the gas separation membrane 3, the new mixed gas G1 continues to be rapidly supplied onto the first surface 31 due to the first convex structure 5 causing the turbulence with respect to the gas flow formed on the first surface 31. As a result, the gas separation apparatus 1 in which the concentration of the carbon dioxide CO₂ on the first surface 31 is less likely to decrease even when the carbon dioxide CO₂ permeates the gas separation membrane 3, and thus the decrease in separation efficiency can be suppressed is obtained.

The gas separation apparatus 1 according to the embodiment includes the mixed gas supply unit 7. The mixed gas supply unit 7 includes the mixed gas flow path part 72, the mixed gas introduction part 74, and the mixed gas discharge part 76. The mixed gas flow path part 72 is defined by the wall surfaces 33 including the first surfaces 31, and the mixed gas G1 flows therethrough. The mixed gas introduction part 74 introduces the mixed gas G1 into the mixed gas flow path part 72. The mixed gas discharge part 76 discharges the mixed gas G1' from the mixed gas flow path part 72.

According to such a configuration, even when exhaust gas or the like higher in concentration of carbon dioxide CO₂ than the atmosphere is used as the mixed gas G1, carbon dioxide CO₂ can be separated while preventing the mixed gas G1 from being diluted with the air.

In the gas separation apparatus 1 according to the embodiment, the mixed gas supply unit 7 includes the second convex structure 8 protruding from the wall surface 33.

According to such a configuration, the turbulence generated by the second convex structure 8 can also act on the mixed gas G1 located in the vicinity of the first surface 31. As a result, the decrease in the concentration of carbon dioxide CO₂ on the first surface 31 can further be suppressed.

In the gas separation apparatus 1 according to the embodiment, the first convex structure 5 protrudes on the outer surface 412 of the wall body 41 at the upstream of the flow of the mixed gas G1 with respect to the gas separation membrane 3.

According to such a configuration, since the gas separation membrane 3 is located at the downstream of the first convex structure 5, the turbulence is apt to occur on the first surface 31 of the gas separation membrane 3. This makes it easier to obtain the effect of suppressing the decrease in separation efficiency.

In addition, the gas separation apparatus 1 according to the embodiment includes at least two gas separation membrane units 2 that are disposed at a distance from each other in a direction crossing the first surface 31.

According to such a configuration, the gas separation apparatus 1 high in separation efficiency of carbon dioxide CO₂ can be realized.

Although the gas separation membrane unit and the gas separation apparatus according to the present disclosure are hereinabove described based on the illustrated embodiments, the present disclosure is not limited thereto.

For example, the gas separation membrane unit and gas separation apparatus according to the present disclosure may be a device in which each unit of the above-described embodiments is replaced with any constituents having substantially the same function, or may be a device in which any constituents are added to the above-described embodiments.

## Claims

1. A gas separation membrane unit comprising:
a gas separation membrane configured to separate a predetermined gas component contained in a mixed gas supplied to a first surface by allowing the predetermined gas component to permeate to a second surface that is a reverse surface of the first surface;
a gas flow path part including a wall body configured to define an internal space through which the predetermined gas component separated flows; and
a first convex structure protruding from at least one of the first surface of the gas separation membrane and an outer surface of the wall body.

2. The gas separation membrane unit according to claim 1, further comprising
two pieces of the gas separation membranes arranged such that the second surfaces are opposed to each other.

3. The gas separation membrane unit according to claim 2, wherein
the first convex structure is disposed on each of the first surfaces of the two gas separation membranes.

4. The gas separation membrane unit according to claim 1, wherein
a projection height of the first convex structure is 0.1 mm or more and 50 mm or less.

5. The gas separation membrane unit according to claim 1, wherein
a gas permeability to carbon dioxide of the gas separation membrane is 5000 GPU or more and 100000 GPU or less.

6. A gas separation apparatus comprising:
the gas separation membrane unit according to claim 1; and
an exhaust pump configured to exhaust the predetermined gas component flowing through the internal space of the gas flow path part.

7. The gas separation apparatus according to claim 6, further comprising
a mixed gas supply unit including
a mixed gas flow path part which is defined by a wall surface including the first surface and through which the mixed gas flows,
a mixed gas introduction part configured to introduce the mixed gas into the mixed gas flow path part, and
a mixed gas discharge part configured to discharge the mixed gas from the mixed gas flow path part.

8. The gas separation apparatus according to claim 7, wherein
the mixed gas supply unit includes a second convex structure protruding from the wall surface.

9. The gas separation apparatus according to claim 7, wherein
the first convex structure protrudes at upstream in a flow of the mixed gas of the gas separation membrane on the outer surface of the wall body.

10. The gas separation apparatus according to claim 6, further comprising
at least two pieces of the gas separation membrane units arranged at a distance from each other in a direction crossing the first surface.
